# EUROPEAN PATENT SPECIFICATION

(11) **EP 3 275 854 B1**
(45) Date of publication and mention of the grant of the patent: **02.12.2020**
(21) Application number: 17171619.4
(22) Date of filing: 17.05.2017
(51) Int. Cl.: C05F 17/00, B01F 7/00, B01F 7/24, B01F 13/10, C05F 17/90, C05F 17/60, C05F 17/907

(54) **FOOD WASTE COMPOSTING RECYCLER WITH MIXING ASSEMBLY**
LEBENSMITTELABFALLRECYCLER MIT MISCHANORDNUNG ZUR KOMPOSTIERUNG
DISPOSITIF DE RECYCLAGE DE DÉCHETS ALIMENTAIRES PAR COMPOSTAGE POURVU D'UN ENSEMBLE DE MÉLANGE

(30) Priority: 27.07.2016 US 201615220510
(43) Date of publication of application: 31.01.2018
(73) Proprietor: Whirlpool Corporation, Benton Harbor, MI 49022 (US)
(72) Inventor: Atkinson, Wade Alan, 21025 Comerio (IT); Latack, Thomas A., 21025 Comerio (IT); Gregory, Joseph, 21025 Comerio (IT); Weston, Michael A., 21025 Comerio (IT)
(74) Representative: Spina, Alessandro

(56) References cited:
- WO-A1-2013/163168
- CA-A1- 2 614 940
- US-A- 3 476 522
- US-A- 3 797 702
- US-A1- 2005 061 044

## Description

### BACKGROUND

Food waste recyclers are known to implement a composting cycle for biologically and chemically decomposing organic material, such as food waste and other refuse, into compost for use as a fertilizer and soil amendment. The composting cycle can be implemented in a composting bin by providing water, heat and aeration to the refuse, and can require a period of time for completion.

The composting bin is capable of holding about seven days of refuse, and contains a mixing assembly to facilitate material movement. The movement of material promotes effective mechanical breakdown and aerates the refuse to prevent anaerobic decomposition, and promotes drying of the refuse through the processing cycle. Additionally, the mixing assembly facilitates material movement at the bottom of the bin to aid in transfer of refuse out of the bin. *Document* CA2614940A1 *discloses a composting apparatus comprising an elongated horizontally oriented maturation tank, a hollow rotatable shaft, two augers, flexible tines, an inlet to introduce temperature controlled forced air and an ultraviolet light source. Document* WO2013/163168A1 *discloses a composting appliance comprising a container, a temperature sensor, a heating element in thermal communication with the container and a programmable controller in electrical communication with the temperature sensor and the heating element Document* US3, 797, 702 *discloses a system for recovering scrap from a plastic manufacturing process, using a screw conveyor to feed scrap from a upper hopper to the outlet of a lower hopper. Document* US2005/0061044A1 *discloses a composter device comprising a grinder and a mixer both supported* in a composting chamber. Document US3,4 76,522 discloses a reactor for viscous liquids mass polymerisation.

### BRIEF DESCRIPTION OF THE DRAWINGS

In the drawings:
FIG. 1 is a perspective view of a food waste recycler including a bin with a stirrer.
FIG. 2 is a block diagram of a control system of the food waste recycler.
FIG. 3 is side view of the bin and stirrer of the food waste recycler with the housing removed for clarity.
FIG. 4 is top view of the bin of FIG. 3.
FIG. 5 is a side view of the stirrer of the food waste recycler.
FTG. 6 is a side view of another embodiment of the stirrer of the food waste recycler.
FTG. 6A is a schematic top view of the stirrer of FIG. 6.

### DETAILED DESCRIPTION

FTG. 1 illustrates a perspective view of a food waste recycler 10 or a food recycler oriented in the vertical direction for transforming organic material into compost by way of a composting cycle of operation. The food waste recycler 10 can include a housing 12 defining an interior 13 having a front wall 14 spaced from a back wall 16, a pair of side walls 17, and a controller 18 located within the housing 12.

A top wall 20 can enclose the housing 12 at the top of the front wall 14, back wall 16, and the pair of side walls 17. The housing 12 can be any structure for enclosing, supporting and protecting the electrical and mechanical components of the food waste recycler 10 including, but not limited to a cabinet with a frame.

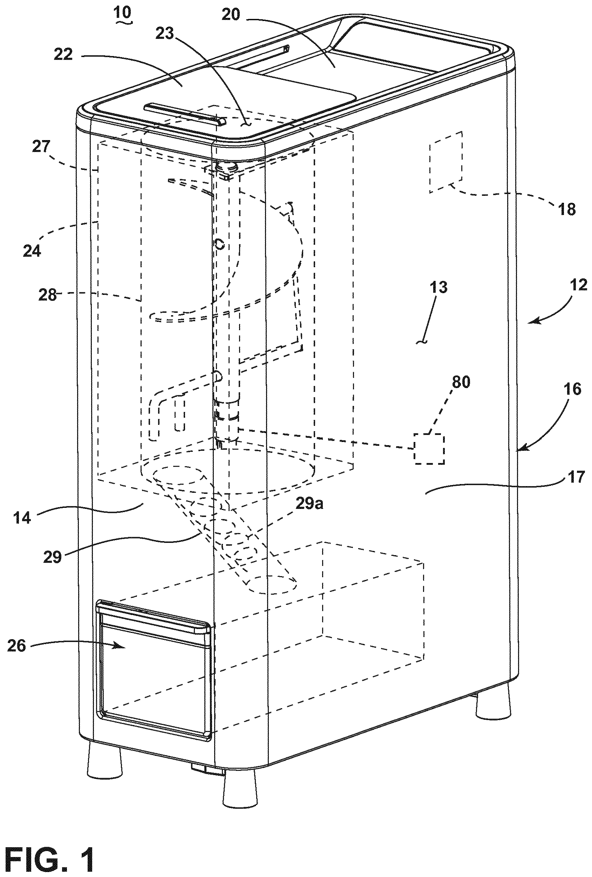

The top wall 20 can include a cover 22 slidably mounted to a portion of the top wall 20 for sliding movement between open or closed positions to enable access to interior components of the food waste recycler 10. The cover 22 can be any barrier that provides selective access to a fill opening 23 for inputting organic material into the food waste recycler 10, including, but not limited to a hingedly, slidably or removably mounted door, drawer, panel or lid. While shown in FIG. 1 as coupled to the top wall 20, the cover 22 can be mounted to any exterior wall enclosing the housing 12 including, but not limited to the front wall 14. The top wall 20, as well as the remainder of the housing 12, can be formed of any material suitable for construction of the housing structure including, but not limited to metal such as steel or steel alloy, plastic, composite materials such as a hardened polymer composite material and combinations thereof. Some models of food waste recyclers 10 can include decorative panels that can be mounted on the housing 12 or one or more walls.

When in the open position, the cover 22 provides access to the interior 13 of the housing 12. In the open position, the cover 22 can further expose any element of the interior 13 including but not limited to one or more water fill inlets for supplying water to the food waste recycler 10 and one or more enzyme dispenser inlets. A bin 24 is provided within a bin housing 27. The bin 24 can be disposed beneath the cover 22 such that the cover provides selective access to the bin 24 as the cover is opened/closed. While the bin 24 is illustrated as a composting bin, it is also contemplated that the bin 24 is a temporary storage bin for accumulating refuse prior to a composting cycle.

The bin 24 further comprises a mixing assembly having a stirrer 28, which includes a shaft 30 mounting an auger 32 and a skimming wand 34. A conduit 29 can extend from the bin 24, such as from a lower portion of the bin 24, toward an access drawer 26. Embodiments of the disclosure can optionally include a transfer mechanism 29a disposed inside the conduit 29 capable of assisting the transfer of material from the bin 24 to the access drawer 26. Examples of a transfer mechanism can include, but are not limited to, a rotatable auger, a conveyor, a gravitational chute, and the like.

The access drawer 26 is provided and slides in or out through an opening in the front wall 14. The access drawer 26 is a drawer slidably mounted to the housing 12 on a horizontal axis for movement between open and closed positions. It will be understood, however, that access to the interior 13 of the food waste recycler 10 via the front wall 14 can be provided in other ways, including but not limited to, a door pivotally connected to the front wall 14. The access drawer can be detachably mounted to an internal side of the housing 12 and is accessible from outside the housing 12. The access drawer 26 can be removable from the interior 13 of the housing 12 so that the contents thereof can be discharged at will by a user, as for example, by dumping the contents of the drawer 26 onto a garden. The access drawer 26 can be located on any part of the housing 12 rather than the front wall 14.

A motor 80 can be provided inside the housing 12 and can be operatively coupled with the stirrer 28 by way of a belt or pulley system. The motor 80 can be a brushless permanent magnet (BPM) motor. Alternately, other motors such as an induction motor or a permanent split capacitor (PSC) motor can also be used.

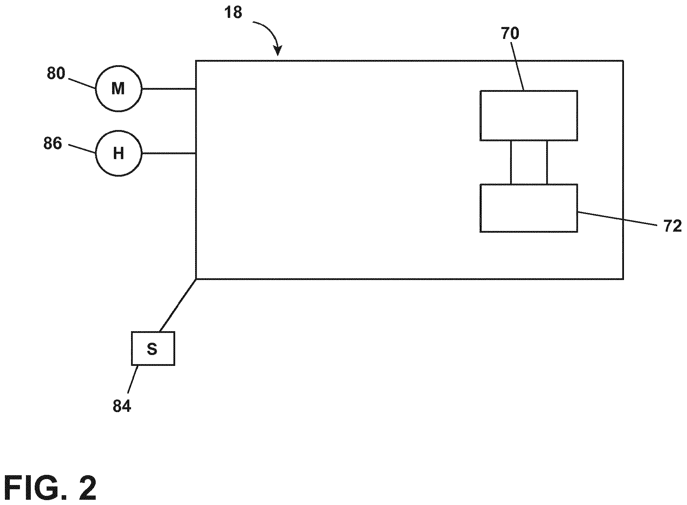

Referring now to FIG. 2, a schematic of the controller 18 for controlling the operation of the food waste recycler 10 is illustrated. The controller 18 can be provided with a memory 70 and a central processing unit (CPU) 72. The memory 70 can be used for storing the control software that is executed by the CPU 72 in completing a cycle of operation using the food waste recycler 10 and any additional software. The memory 70 can also be used to store information, such as a database or table, and to store data received from one or more components of the food waste recycler 10 that can be communicably coupled with the controller 18.

The controller 18 can be operably coupled with one or more components of the food waste recycler 10 for communicating with and controlling the operation of the component to complete a cycle of operation. For example, the controller 18 can be operably coupled with the motor 80 to control the operation of the motor 80. In another example, the controller 18 can be operably coupled to a heater 86. The controller 18 can also be coupled with one or more sensors 84 provided in one or more of the systems of the food waste recycler 10 to receive input from other sensors in the food waste recycler 10.

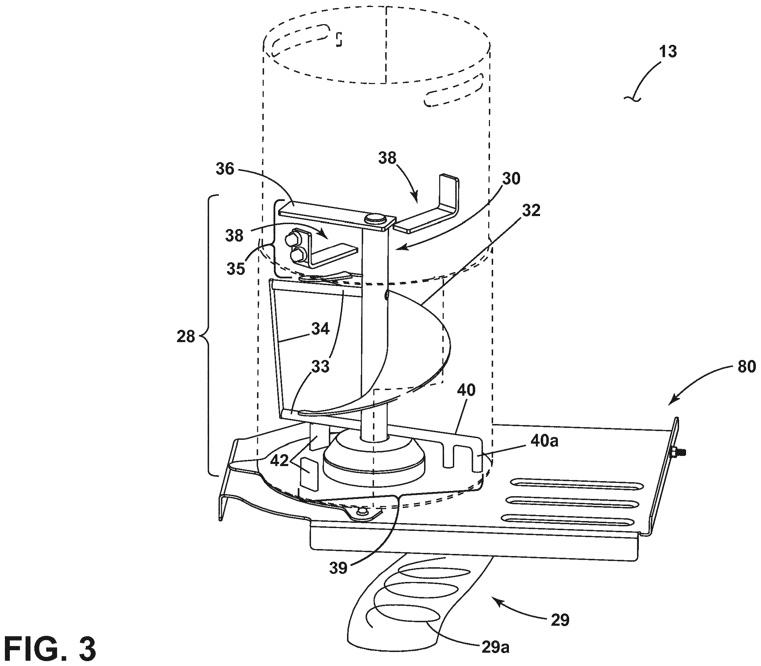

FIG. 3 illustrates details of the components of the mixing assembly of the food waste recycler 10 in a side view with the housing 12 removed for clarity. As is seen in FIG. 3, the mixing assembly comprises the bin 24, the motor 80, and the stirrer 28. The motor 80 can be configured to operate the mixing assembly at different speeds during the cycle of operation to facilitate the reducing or mixing of refuse in the bin 24 or the access drawer 26.

The stirrer 28 comprises the shaft 30, the auger 32, and the skimming wand 34. The shaft 30 extends from the bottom of the bin 24 towards the top, and is coupled to the motor 80 to operate, rotate, toggle, or actuate the stirrer 28. The auger 32 extends about the shaft 30 and may be in the form of a blade, or a flange, and may rotate, or wrap, around the shaft 30 in a spiral, helical, or other suitable shape.

The skimming wand 34 is mounted to the shaft 30 by means of the bars 33 and extends toward the bin 24. However, the skimming wand 34 does not contact the bin 24; instead, the skimming wand is spaced slightly from the bin to avoid direct contact between the skimming wand 34 and the inner surface 24a of the bin 24, which reduces wear between the two parts. The skimming wand may comprise a rod or a blade.

The stirrer 28 further comprises two choppers 35, 39. A first chopper 35 is located on an upper portion of the stirrer 28 and comprises a first blade 36 mounted to the shaft 30, and a second blade 38 mounted to an inner surface 24a of the bin 24. A second chopper 39 is located on the lower portion of the stirrer 28 and comprises a fork 40 having tines 40a, mounted to a bar 33 or any other suitable approach such as directly mounting to the auger 32, and projections 42 mounted to the bin 24 located in between the rotational path defined by the tines 40a.

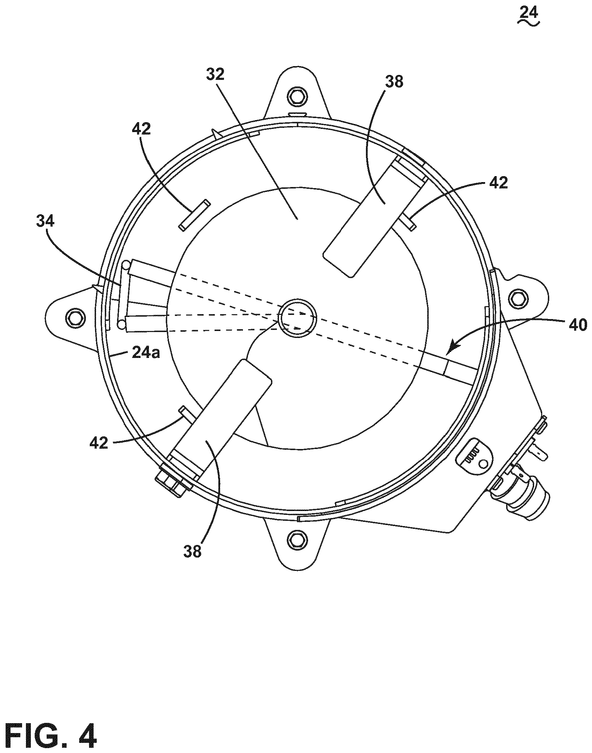

FIG. 4 is a top view of bin 24 in FIG. 3 in order to show in greater detail the projections 42 mounted to the bin 24, that are located in between the rotational path defined by the tines 40a. FIG. 4 also better illustrates the skimming wand 34, which is spaced very closely to the inner surface 24a of the bin 24, without touching the inner surface 24a.

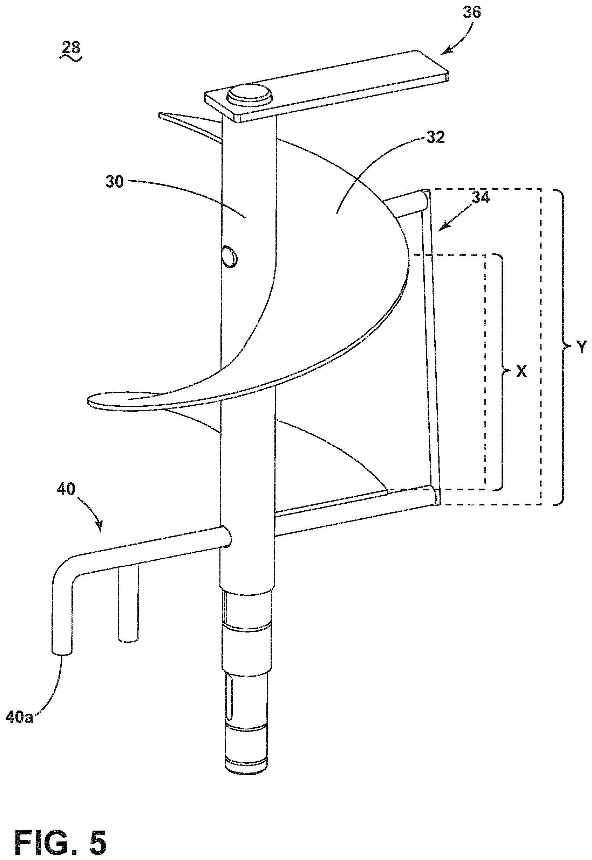

Turning to FIG. 5, the stirrer 28 is shown without the bin 24. While illustrated as wrapping around the shaft for multiple revolutions, the auger 32 can wrap around the shaft for less than or more than one revolution. It is also contemplated that the auger 32 does not continuously wrap around the shaft 30, wherein the auger comprises a plurality of segments that wrap around the shaft 30. The skimming wand 34, like the auger, may rotate, or wrap, around the shaft 30 for less than one revolution and/or more than one revolution. The distance of the crest of the auger 32 to the next crest or the auger 32 (a complete revolution) defines pitch X of the auger 32. Likewise, the distance of the crest of the skimming wand 34 to the next crest of the skimming wand 34 defines the pitch Y of the skimming wand 34. As seen in FIG. 4, the skimming wand 34 makes less than 1/8 of a revolution around the shaft 30. In this embodiment, the pitch X of the auger 32 is less than the pitch of the skimming wand 34 since the vertical distance of pitch X in a complete revolution is less than the vertical distance than pitch Y of skimming wand 34 in less than 1/8 of a revolution.

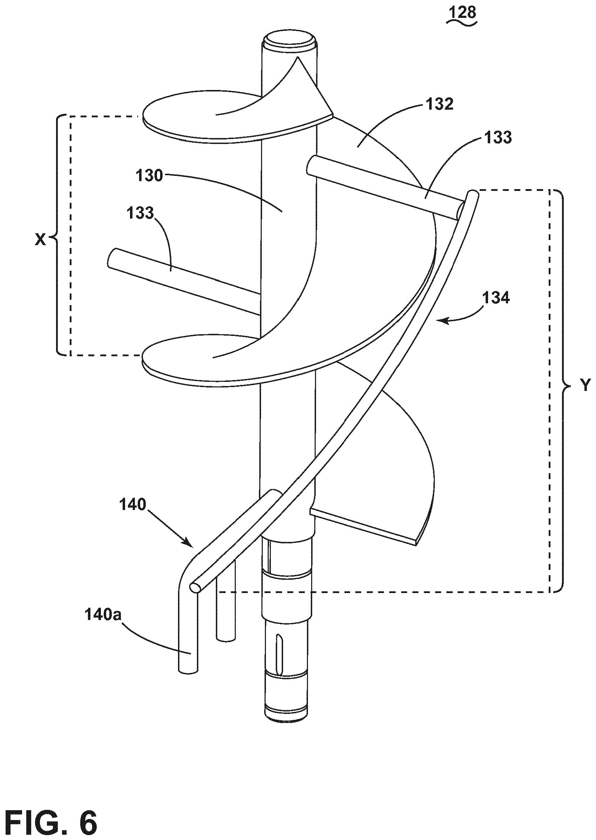

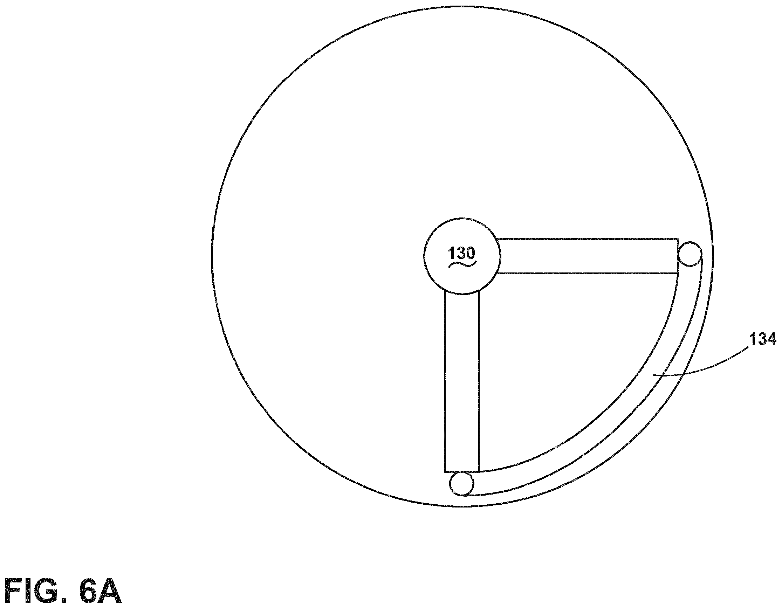

An alternative embodiment of a stirrer is illustrated in FIG. 6. This embodiment is similar to the first embodiment, therefore, like parts are identified with like numerals increasing by 100, with it being understood that the description of the like parts of the first embodiment applies to the additional embodiment, unless otherwise noted. In this embodiment, the skimming wand 134 is mounted to the shaft by means of a bar 133 and a fork 140. Also, the pitch X of the auger 132 and the pitch Y of the skimming wand 134 are less than the pitch X of the auger 32 and the pitch of the skimming wand 34 illustrated in FIG. 4. The skimming wand 134 of FIG. 6 is shown in FIG. 6A making about ¼ of a revolution around the shaft 130. Since the pitch Y of skimming wand 134 is less than double that of pitch Y of skimming wand 34 of FIG. 5, the pitch Y of skimming wand 134 is less than pitch Y of skimming wand 34.

An example of a complete cycle of operation can include receiving organic material into the bin 24, mixing the refuse within the bin 24 while simultaneously drying the refuse and then transferring the refuse to the access drawer 26 after which the composted refuse can be removed.

More specifically, operation of the stirrer 28 can include rotating, toggling, or actuating the stirrer 28. Upon operation of the stirrer 28, the auger 32 mixes the refuse in the bin 24. The bin 24 may be a mixing container and/or a composting container where the refuse is mixed and/or composted. Simultaneously, the skimming wand 34 moves near the inner surface 24a of the bin 24 to dislodge refuse attached to the inner surface 24a without scraping the inner surface 24a. The skimming wand 34 also helps to move refuse vertically. In addition, the choppers 35, 39, interact to comminute refuse in the bin 24. The choppers can be can be spaced apart relative to the stirrer and located on an upper and/or lower portion of the stirrer 28. A chopper located at the lower portion of the stirrer 28, such as chopper 39, can keep refuse from settling at the bottom of the bin 24, and prevent the formation of a crust. Also, chopper 39 may aid in transfer of material outside of the bin 24 through conduit 29 to access drawer 26.

## Claims

1. A food waste recycler (10) for composting refuse according to an automatic cycle of operation, the food waste recycler (10) comprising:
a housing (12);
a bin (24) located within the housing (12) and defining an inner surface (24a);
a heater (86) thermally coupled to the bin;
a motor (80) located within the housing (12); and
a stirrer (28) located in the bin (24) and having a shaft (30) coupled to the motor (80), an auger (32) extending about the shaft (30), and a skimming wand (34), said skimming wand (24) being mounted to the shaft (30) by means of bars (33) and located adjacent to, but not in contact with the inner surface (24a);
wherein the motor (80) rotates the shaft (30) to rotate the auger (32), which mixes waste within the bin (24), and rotates the skimming wand (34), which moves near the inner surface (24a) to dislodge refuse attached to the inner surface (24a) without scraping the inner surface (24a).

2. The food waste recycler (10) of claim 1, wherein the bin (24) is a mixing container where the refuse is mixed.

3. The food waste recycler (10) of claims 1-2, wherein the bin (24) is a composting container where the refuse is composted.

4. The food waste recycler (10) of claims 1-3, wherein the auger (32) comprises a blade.

5. The food waste recycler (10) of claim 4, wherein the blade has at least one of a spiral or helical shape.

6. The food waste recycler (10) of claims 1-5, wherein the skimming wand (34) comprises at least one of a rod or blade.

7. The food waste recycler (10) of claims 1-6, wherein the auger (32) has a first pitch and the skimming wand (34) has a second pitch, which is less than the first pitch.

8. The food waste recycler (10) of claims 1-7, wherein the auger (32) wraps around the shaft (30) for at least one revolution and the skimming wand (34) wraps around the shaft (30) for less than one revolution.

9. The food waste recycler (10) of claims 1-8, further comprising at least one chopper (39) having a first element mounted to the stirrer (28) and a second element mounted to the bin (24), wherein the first and second elements interact to comminute refuse in the bin (24).

10. The food waste recycler (10) of claim 9, further comprising at least two choppers (35, 39), which are spaced apart relative to the stirrer (28) and located on an upper and/or lower portion thereof.

11. The food waste recycler (10) of claim 10, wherein a first chopper (35) located on the upper portion of the stirrer (28) comprises a first blade (36) mounted to the shaft (30), said first blade (36) cooperating in use with a second blade (38) mounted to an inner surface (24a) of the bin (24), and wherein a second chopper (39) located on the lower portion of the stirrer (28) comprises a fork (40) having tines (40a).

## Patentansprüche

1. Lebensmittel-Abfallverwerter (10) zum Kompostieren von Abfall gemäß einem automatischen Zyklusbetrieb, wobei der Lebensmittel-Abfallverwerter (10) Folgendes umfasst:
ein Gehäuse (12);
einen Abfallbehälter (24), der sich innerhalb des Gehäuses (12) befindet und eine Innenfläche (24a) definiert;
ein Heizelement (86), das thermisch an den Abfallbehälter gekoppelt ist;
einen Motor (80), der sich innerhalb des Gehäuses (12) befindet; und
ein Rührwerk (28), das sich in dem Abfallbehälter (24) befindet und einen Schaft (30) aufweist, der an den Motor (80) gekoppelt ist, einen Schneckenbohrer (32), der sich um den Schaft (30) erstreckt und einen Abzugsstab (34), wobei der Abzugsstab (24) mittels Streben (33) an dem Schaft (30) befestigt ist und sich benachbart der, jedoch nicht in Kontakt mit der Innenfläche (24a) befindet;
wobei der Motor (80) den Schaft (30) dreht, um den Schneckenbohrer (32) zu drehen, welcher Abfall innerhalb des Abfallbehälters (24) vermischt, und den Abzugsstab (34) dreht, der sich in der Nähe der Innenfläche (24a) bewegt, um Abfall, der an der Innenfläche (24a) befestigt ist, zu entfernen, ohne die Innenfläche (24a) zu zerkratzen.

2. Lebensmittel-Abfallverwerter (10) nach Anspruch 1, wobei der Abfallbehälter (24) ein Mischungsbehälter ist, in dem Abfall vermischt wird.

3. Lebensmittel-Abfallverwerter (10) nach Anspruch 1-2, wobei der Abfallbehälter (24) ein Kompostbehälter ist, in dem der Abfall kompostiert wird.

4. Lebensmittel-Abfallverwerter (10) nach Anspruch 1-3, wobei der Schneckenbohrer (32) eine Schaufel umfasst.

5. Lebensmittel-Abfallverwerter (10) nach Anspruch 4, wobei die Schaufel mindestens eine von einer spiralförmigen oder schneckenförmigen Form aufweist.

6. Lebensmittel-Abfallverwerter (10) nach Anspruch 1-5, wobei der Abzugsstab (34) mindestens eines von einer Stange oder einer Schaufel umfasst.

7. Lebensmittel-Abfallverwerter (10) nach Anspruch 1-6, wobei der Schneckenbohrer (32) einen ersten Anstellwinkel aufweist und der Abzugsstab (34) einen zweiten Anstellwinkel aufweist, der geringer als der erste Anstellwinkel ist.

8. Lebensmittel-Abfallverwerter (10) nach Anspruch 1-7, wobei sich der Schneckenbohrer (32) für mindestens eine Umdrehung um den Schaft (30) wickelt und sich der Abzugsstab (34) für weniger als eine Umdrehung um den Schaft (30) wickelt.

9. Lebensmittel-Abfallverwerter (10) nach Anspruch 1-8, weiter umfassend mindestens ein Zerteilungsgerät (39), das ein erstes, an dem Rührwerk (28) befestigtes Element und ein zweites, an dem Abfallbehälter (24) befestigtes Element aufweist, wobei die ersten und zweiten Elemente miteinander in Wechselwirkung stehen, um Abfall in dem Abfallbehälter (24) zu zerkleinern.

10. Lebensmittel-Abfallverwerter (10) nach Anspruch 9, weiter umfassend mindestens zwei Zerteilungsgeräte (35, 39), die in Bezug auf das Rührwerk (28) voneinander beabstandet sind und sich an einem oberen und/oder unteren Abschnitt davon befinden.

11. Lebensmittel-Abfallverwerter (10) nach Anspruch 10, wobei ein erstes Zerteilungsgerät (35), das sich an dem oberen Abschnitt des Rührwerks (28) befindet, eine erste Schaufel (36) umfasst, die an dem Schaft (30) befestigt ist, wobei die erste Schaufel (36) im Gebrauch mit einer zweiten Schaufel (38), die an einer Innenfläche (24a) des Abfallbehälters (24) befestigt ist, kooperiert, und wobei ein zweites Zerteilungsgerät (39), das sich an dem unteren Abschnitt des Rührwerks (28) befindet, eine Gabel (40), die Zinken (40a) aufweist, umfasst.

## Revendications

1. Recycleur de déchets alimentaires (10) pour composter des déchets selon un cycle de fonctionnement automatique, le recycleur de déchets alimentaires (10) comprenant :
un logement (12) ;
un bac (24) situé à l'intérieur du logement (12) et définissant une surface interne (24a) ;
un dispositif chauffant (86) couplé thermiquement au bac ;
un moteur (80) situé à l'intérieur du logement (12) ; et
un agitateur (28) situé dans le bac (24) et présentant un arbre (30) couplé au moteur (80), une tarière (32) s'étendant autour de l'arbre (30), et une baguette d'écrémage (34), ladite baguette d'écrémage (24) étant montée sur l'arbre (30) au moyen de barres (33) et située adjacente à, mais non en contact avec, la surface interne (24a) ;
dans lequel le moteur (80) fait tourner l'arbre (30) pour faire tourner la tarière (32), qui mélange les déchets dans le bac (24), et fait tourner la baguette d'écrémage (34), qui se déplace près de la surface interne (24a) pour déloger les déchets attachés à la surface interne (24a) sans gratter la surface interne (24a).

2. Recycleur de déchets alimentaires (10) selon la revendication 1, dans lequel le bac (24) est un récipient de mélange dans lequel les déchets sont mélangés.

3. Recycleur de déchets alimentaires (10) selon les revendications 1-2, dans lequel le bac (24) est un récipient de compostage dans lequel les déchets sont compostés.

4. Recycleur de déchets alimentaires (10) selon les revendications 1-3, dans lequel la tarière (32) comprend une lame.

5. Recycleur de déchets alimentaires (10) selon la revendication 4, dans lequel la lame présente au moins l'une parmi une forme en spirale ou en hélice.

6. Recycleur de déchets alimentaires (10) selon les revendications 1-5, dans lequel la baguette d'écrémage (34) comprend au moins l'une parmi une tige ou une lame.

7. Recycleur de déchets alimentaires (10) selon les revendications 1-6, dans lequel la tarière (32) présente un premier pas et la baguette d'écrémage (34) présente un second pas, qui est inférieur au premier pas.

8. Recycleur de déchets alimentaires (10) selon les revendications 1-7, dans lequel la tarière (32) s'enroule autour de l'arbre (30) pendant au moins une révolution et la baguette d'écrémage (34) s'enroule autour de l'arbre (30) pendant moins d'une révolution.

9. Recycleur de déchets alimentaires (10) selon les revendications 1-8, comprenant en outre au moins un hacheur (39) présentant un premier élément monté sur l'agitateur (28) et un second élément monté sur le bac (24), dans lequel les premier et second éléments interagissent pour broyer les déchets dans le bac (24).

10. Recycleur de déchets alimentaires (10) selon la revendication 9, comprenant en outre au moins deux hacheurs (39), qui sont espacés par rapport à l'agitateur (28) et situés sur une partie supérieure et/ou inférieure de celui-ci.

11. Recycleur de déchets alimentaires (10) selon la revendication 10, dans lequel un premier hacheur (35) situé sur la partie supérieure de l'agitateur (28) comprend une première lame (36) montée sur l'arbre (30), ladite première lame (36) coopérant lors de l'utilisation avec une seconde lame (38) montée sur une surface interne (24a) du bac (24), et dans lequel un second hacheur (39) situé sur la partie inférieure de l'agitateur (28) comprend une fourche (40) présentant des dents (40a).
